Europäisches Patentamt

European Patent Office

Office européen des brevets

(19)

(11) Numéro de publication: **0 011 034**
**B1**

(12) **FASCICULE DE BREVET EUROPEEN**

(45) Date de publication du fascicule du brevet: **22.12.82**

(51) Int. Cl.³: **G 01 T 1/29**

(21) Numéro de dépôt: **79400802.9**

(22) Date de dépôt: **26.10.79**

(54) **Dispositif de visualisation de la densité du courant au sein d'un faisceau de particules chargées.**

(30) Priorité: **07.11.78 FR 7831437**

(43) Date de publication de la demande:
**14.05.80 Bulletin 80/10**

(45) Mention de la délivrance du brevet:
**22.12.82 Bulletin 82/51**

(84) Etats contractants désignés:
**DE GB**

(56) Documents cités:
**FR - A - 2 220 871**

**REVIEW OF SCIENTIFIC INSTRUMENTS, vol. 49, no. 9, septembre 1978, New York U.S.A. N. NATSUAKI et al. "Spatial dose uniformity monitor for electrically scanned ion beam", pages 1300—1304.**
**REVIEW OF SCIENTIFIC INSTRUMENTS,vol. 46, no. 3, mars 1975, New York U.S.A. E. P. EERNISSE et al. "Ion beam profile monitor", pages 266—268.**
**JOURNAL OF SCIENTIFIC INSTRUMENTS vol. 44, no. 4, septembre 1967, Londres, G.B. R. KALIBJIAN et al. "Electron beam profile indicator", pages 800—801.**

(73) Titulaire: **THOMSON-CSF**
**173, Boulevard Haussmann**
**F-75379 Paris Cedex 08 (FR)**

(72) Inventeur: **Berte, Marc**
**"THOMSON-CSF" - SCPI 173, bld Haussmann**
**F-75360 Paris Cedex 08 (FR)**
Inventeur: **Legrand, Pierre**
**"THOMSON-CSF" SCPI 173, bld Haussmann**
**F-75360 Paris Cedex 08 (FR)**

(74) Mandataire: **Meslin, Suzanne, et al**
**THOMSON-CSF SCPI 173, Bld Haussmann**
**F-75379 Paris Cedex 08 (FR)**

Courier Press, Leamington Spa, England.

Dispositif de visualisation de la densité du courant au sein d'un faisceau de particules chargées

La présente invention a pour objet un dispositif permettant de visualiser la répartition de la densité du courant au sein d'un faisceau de particules chargées et plus particulièrement d'un faisceau d'ions utilisé dans un appareil d'usinage ionique.

Un moyen connu de mesurer la densité de courant dans un faisceau de particules chargées est de disposer sur son trajet une surface témoin et de mesurer ensuite l'érosion produite par le faisceau sur la surface soumise à son bombardement.

Il est également connu de mesurer la répartition de la densité de courant dans un faisceau en utilisant un dispositif comportant une série d'électrodes collectrices coplanaires, de forme annulaire, concentriques, au-dessus desquelles est disposé un cache rotatif percé radialement d'orifices dont le nombre est égal au nombre d'électrodes annulaires, chacun de ces orifices étant disposé en vis-à-vis de ces électrodes. La mesure des courants reçus par les électrodes collectrices durant une révolution du cache, permet de déterminer la répartition de densité dans le faisceau, pour différents rayons et en fonction de l'angle de rotation de ce cache.

Il est connu de l'article de NATSUAKI et al intitulé "Spatial dose uniformity monitor for electrically scanned ion beam" publié dans Review of Scientific Instruments — volume 49, N° 9, septembre 1978 — pages 1300 à 1304 — de réaliser une visualisation de la densité du courant au sein d'un faisceau de particules chargées. Cette visualisation peut être réalisée suivant différents modes, notamment sur traceur de courbes, tube à rayons cathodiques, etc . . . Ces différents modes de visualisation sont commandés par le programme d'un microprocesseur. Aucune explication n'est donnée quant à la manière d'obtenir une bonne visualisation. Un tel système, s'il permet une grande souplesse d'utilisation notamment en ce qui concerne le changement de modes de visualisation, n'est pas de réalisation aisée. En effet, l'utilisation d'un micro-processeur nécessite l'adaptation d'un logiciel d'autant plus important que le nombre de modes de visualisation est grand.

Par ailleurs, l'article de EERNISSE at al intitulé "Ion beam profile monitor" publié dans la revue précitée — volume 46, N° 3, mars 1975 — pages 266 à 268, lui aussi décrit un dispositif conforme au préambule de la rev. 1.

Or, la Demanderesse a constaté que la visualisation en pseudo-perspective de l'image de densité de courant du faisceau électronique permettait en particulier de faciliter le réglage du faisceau afin d'obtenir une bonne homogénéité de celui-ci, par action sur les différents paramètres de fonctionnement de la source de particules.

Pour parvenir à ce but par des moyens simples, on réalise selon l'invention, un dispositif de visualisation de la répartition de la densité du courant au sein d'un faisceau de particules électriquement chargées, comportant une pluralité d'éléments collecteurs sous forme de capteurs répartis en lignes et en collonnes et interceptant les particules chargées de faisceau, des moyens de multiplexage des signaux électriques engendrés par des capteurs, commandés par une horloge, un oscilloscope dont les amplificateurs d'entrée pour le balayage horizontal (X) et vertical (Y) de l'écran par le spot du faisceau reçoivent respectivement un signal sous forme de rampe inclinée et un signal issu des moyens de multiplexage, lesdits signaux étant rythmés par l'horloge de manière à faire apparaître sur l'écran l'amplitude des signaux électriques engendrés par chaque capteur, l'image d'une ligne de capteurs étant décalée par rapport à la précédente à l'aide de moyens pour ajouter une tension de valeur réglable prédéterminée à celle issue des moyens de multiplexage et transmise à l'amplificateur vertical, caractérisé en ce que des moyens de prélèvement de tension sont connectés à la sortie des moyens pour ajouter une tension de valeur réglable prédéterminée et sont reliés à l'amplificateur horizontal, une fraction réglable de la tension de valeur réglable prédéterminée étant ainsi ajoutée à la tension injectée dans l'amplificateur horizontal, de manière à décaler sur l'écran, d'une même valeur et dans le même sens chaque début et chaque fin de signal correspondant à une ligne de capteurs par rapport au signal représentant la ligne précédente, le tout pour obtenir sur ledit écran une vue en pseudo-perspective de la densité de courant du faisceau.

L'invention sera mieux comprise et d'autres caractéristiques apparaîtront à l'aide de la description ci-après et des dessins qui l'accompagnent et sur lesquels:

la figure 1 représente un exemple de réalisation du dispositif de mesure faisant partie du dispositif de visualisation suivant l'invention,

la figure 2 montre un autre exemple de réalisation du dispositif de mesure,

les figures 3 et 4 montrent des détails de réalisation du dispositif de la figure 2,

la figure 5 représente schématiquement un système de traitement des signaux recueillis par le dispositif suivant l'invention,

les figures 6 et 7 représentent respectivement les signaux appliqués sur les entrées X, Y, Z d'un tube cathodique, et la visualisation de la densité du courant au sein du faisceau de particules chargées.

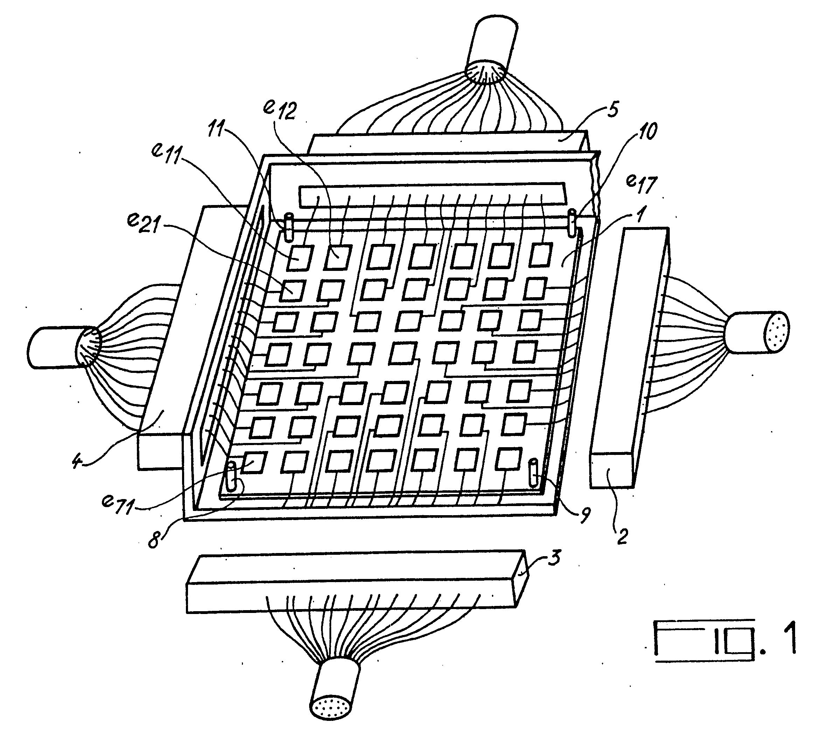

Le dispositif de visualisation suivant l'invention montré en figure 1 comporte un plateau-support 1 en matériau électriquement isolant (de l'alumine par exemple) sur lequel sont fixées m x n éléments collecteurs $e_{11}$, $e_{12}$, $e_{13}$ ... $e_{21}$, $e_{22}$, $e_{23}$ ... $e_{mn}$ réalisés en un matériau électriquement conducteur, ces éléments étant disposés de façon à former un réseau à $m$ lignes et $n$ colonnes. Chacun de ces éléments $e_{mn}$ est relié, au moyen d'un conducteur électrique à l'un des connecteurs 2, 3, 4, 5.

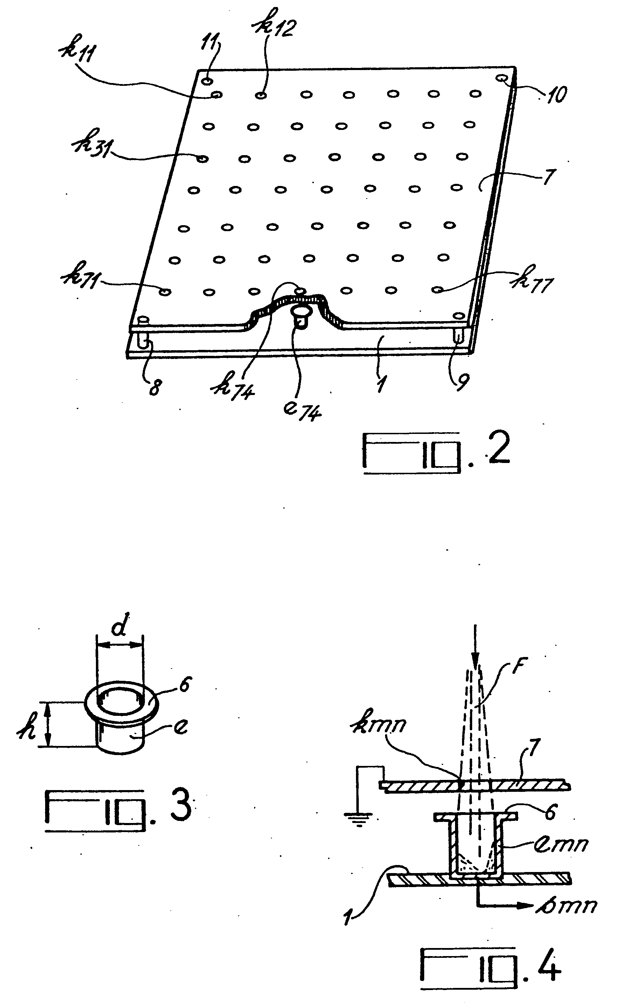

Dans l'exemple de la figure 1, les éléments $e_{mn}$ collecteurs sont des plaquettes métalliques de forme carrée, mais ces éléments $e_{mn}$ peuvent présenter d'autres formes et en particulier une forme telle que montrée en figure 3, où l'élément collecteur $e$ est une cuvette de forme cylindrique réalisée en un matériau électriquement conducteur et présentant un bord 6 large.

L'élément collecteur $e$ peut être polarisé positivement ou négativement suivant la nature des particules utilisées (s'il s'agit d'ions, l'élément $e$ sera polarisé négativement).

La profondeur $h$ de la cuvette est supérieure à son diamètre $d$ de façon à réduire au miximul l'émission secondaire de l'élément $e$.

Dans un exemple de réalisation préféré du dispositif de visualisation suivant l'invention, montré en figure 2, une plaque-écran 7 est disposée au-dessus du plateau-support 1 et est maintenue en position convenable aux moyens d'entretoises 8; 9; 10; 11 électriquement isolantes. Cette plaque-écran 7 est munie de $q$ orifices $k_{11}$, $k_{12}$, ... $k_{21}$, $k_{22}$ ... $k_{mn}$, chacun de ces orifices $k_{mn}$ étant superposé à l'élément $e_{mn}$ correspondant (figure 1). La plaque 7 en matériau électrique conducteur est reliée à la masse.

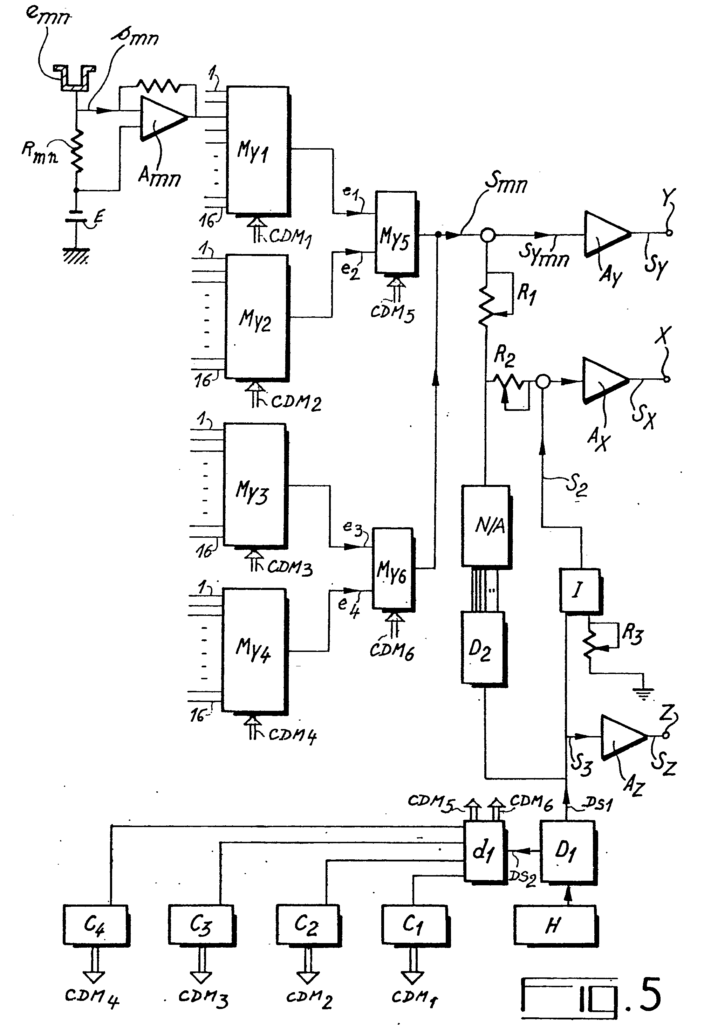

Le dispositif est destiné à être placé sur le trajet du faisceau de particules chargées, perpendiculairement à la trajectoire moyenne de ce faisceau F, la plaque-écran 7 étant placée en amont du plateau-support 1. Le diamètre des orifices $k_{mn}$ étant sensiblement égal au diamètre intérieur des éléments cylindriques $e_{mn}$ (figure 4), la portion du faisceau F traversant chaque orifice $k_{mn}$ est recueillie par l'élément $e_{mn}$ collecteur correspondant qui fournira un signal $s_{mn}$ proportionnel au courant reçu.

Un système de traitement, suivant l'invention, du signal $s_{mn}$ recueilli est représenté schématiquement en figure 5. Ce système de traitement, dans cet exemple de réalisation, comporte:

q amplificateurs différentiels $A_{mn}$ respectivement associés aux q éléments $e_{mn}$ fournissant les signaux $s_{mn}$;

un système de multiplexage à deux niveaux, formé de multiplexeurs $M_{Y1}$, $M_{Y2}$, $M_{Y3}$, $M_{Y4}$, et $M_{Y5}$, $M_{Y6}$ fournissant des signaux $S_{Ymn}$;

un amplificateur $A_Y$ destiné à amplifier les signaux $S_{Ymn}$ et délivrant des signaux $S_Y$ destinés à être injectés dans la voie Y d'un oscilloscope (20);

un système à base de temps, commandé par une horloge H associée à des compteurs $C_1$, $C_2$,

$C_3$, $C_4$ qui génère des impulsions de commande du système de multiplexage;

un diviseur $D_1$ délivrant, à partir des impulsions fournies par l'horloge H, des signaux $D_{S1}$ et $D_{S2}$;

un compteur binaire $D_2$;

un décodeur $d_1$;

un convertisseur numérique analogique N/A;

un intégrateur I fournissant, à partir des impulsions fournies par l'horloge H, un signal $S_2$ de balayage;

un amplificateur $A_X$ délivrant à partir du signal $S_2$ un signal $S_X$ destiné à être injecté dans la voie X de l'oscilloscope (20);

un amplificateur $A_Z$ d'effacement permettant de moduler l'amplitude du signal qui lui est appliqué de façon à fournir un signal $S_Z$ qui, injecté dans la voie Z de l'oscilloscope, assure l'effacement du retour de balayage.

Dans l'exemple de réalisation du système de traitement et de visualisation des signaux $s_{mn}$, suivant l'invention, illustré par la figure 5, les signaux $s_{mn}$ sont ceux recueillis à la sortie des q éléments collecteurs $e_{mn}$, répartis sur la plaque écran, telle que la plaque écran 7 de la figure 2, le nombre q étant égal à m x n.

Chaque élément collecteur $e_{mn}$ peut fournir un signal de sortie $s_{mn}$ qui est un courant électrique proportionnel au flux de particules incident. Dans la réalisation illustrée par la figure 5, on se place dans le cas d'un faisceau d'ions. La source d'ions est par exemple un duoplasmatron. Si on considère un élément $e_{mn}$ collecteur déterminé, cet élément $e_{mn}$ forme avec la source ionique un circuit électrique équivalent à un circuit bouclé comportant, une source de haute tension continue (de l'ordre de 2000 V) de forte résistance interne (de l'ordre de $4 \cdot 10^6 \Omega$) placée en série avec la résistance de mesure $R_{mn}$ (figure 5) et une source de tension continue E. Le courant traversant la résistance $R_{mn}$ est donc proportionnel au courant ionique $s_{mn}$ et va créer aux bornes de la résistances $R_{mn}$ l'apparition d'une différence de potentiel également proportionnelle au courant ionique $s_{mn}$ collecté par l'élément $e_{mn}$, c'est-à-dire proportionnelle au paramètre que l'on veut mesurer et visualiser.

Un amplificateur différentiel $A_{mn}$ est associé à chacun des éléments collecteurs $e_{mn}$. Cet amplificateur $A_{mn}$ recueille entre ses deux bornes d'entrée, la différence de potentiel qui se développe aux bornes de la résistance $R_{mn}$ et l'amplifie. L'amplificateur différentiel $A_{mn}$ assure également l'interface entre les éléments collecteurs $e_{mn}$ et les éléments électroniques de traitement des signaux mesurés notamment les adaptations d'impédances et de niveaux de ces signaux.

La source délivrant la tension continue E est une source unique, de référence commune à tous les amplificateurs différentiels $A_{mn}$. La tension E fournie par la source doit être "flottante". Elle participe, avec les amplificateurs $A_{mn}$, à l'adaptation électrique précitée entre les deux sous-ensembles du système et permet une plus grande excursion en amplitude des signaux à mesurer. Elle doit être en opposition avec la force électromotrice équivalente à la source ionique, son pôle positif est relié à la masse du châssis du système de traitement et de visualisation des signaux $s_{mn}$ et l'amplitude de la force contre-électromotrice qu'elle doit développer est de l'ordre de 50 V. Toutes les résistances $R_{mn}$ sont identiques et peuvent être de l'ordre de 2 K. Un exemple d'amplificateur différentiel utilisable est l'amplificateur en circuits intégrés de type LM 324 de la firme NATIONAL SEMICONDUCTOR.

Les signaux de sortie de ces amplificateurs $A_{mn}$ différentiels sont transmis ensuite aux entrées de circuits d'un premier niveau de multiplexage. Sur la figure 5, quatre multiplexeurs $M_{Y1}$ à $M_{Y4}$ pour signaux analogiques sont représentés. Pour fixer les idées, on supposera dans ce qui suit, que le nombre d'éléments collecteurs $e_{mn}$ est de soixante quatre, répartis sur une matrice carrée (c'est-à-dire: $q = 64$ et $m = n = 8$). Chacun des multiplexeurs $M_{Y1}$ à $M_{Y4}$ est donc doté de huit entrées de signaux. Outre ces entrées, il est prévu des entrées de commande de multiplexage $CDM_1$ à $CDM_4$. Dans l'exemple de la figure 5, chaque multiplexeur peut être constitué par un module intégré du type DG 506 de la firme SILICONIX dont les entrées de commande de multiplexage sont au nombre de quatre et destinées à recevoir un mot binaire de quatre bits. Un décodeur interne transforme ces quatre bits en seize possibilités d'aiguillage des seize signaux d'entrées vers la sortie unique. L'ordre des connexions se fait de la façon suivante: entrée 1 du multiplexeur $M_{Y1}$ connectée à sortie $s_{11}$ via l'amplificateur $A_{11}$; entrée 2 du multiplexer $M_{Y1}$ étant reliée à la sortie $s_{15}$ via l'amplificateur $A_{15}$ etc . . . Les autres signaux et tensions d'alimentation nécessaires au bon fonctionnement de ces circuits de multiplexage (et notamment le signal d'autorisation permettant la prise en compte effective des signaux de commande de multiplexage) n'ont pas été représentés. Ces signaux sont bien connus de l'homme de métier.

Les sorties des multiplexeurs $M_{Y1}$ à $M_{Y4}$ sont transmises, deux à deux, à un second niveau de multiplexage constitué par deux portes analogiques doubles $M_{Y5}$ et $M_{Y6}$ dont les sorties uniques sont connectées entre elles pour former une fonction logique "OU câblé" fournissant un signal $S_{mn}$ de sortie des circuits de multiplexage. Chacune des portes analogiques $M_{Y5}$ et $M_{Y6}$ qui peut être par exemple un module intégré du type DG 181 de la firme précitée, comporte des entrées de commande de multiplexage $CDM_5$, $CDM_6$ respectivement au nombre de deux, et destinées à recevoir chacune à des instants prédéterminés les mots binaires de commande "10" "01" ou "00", ce dernier corespondant à une phase non activée. Le premier mot de commande "10" commande par exemple l'aiguillage des signaux présents sur les entrées $e_1$, $e_2$ du multiplexeur $M_{Y5}$ vers l'amplificateur $A_Y$; le deuxième mot de commande "01" commandant l'aiguillage des signaux de $e_2$ et $e_4$ vers $A_Y$, et ainsi de suite.

Les signaux $S_{mn}$ multiplexés constituent les signaux échantillonnés à visualiser. Pour ce faire, on utilise l'écran d'un oscilloscope. Les signaux $S_{mn}$ sont transmis à la voie Y d'un tube cathodique (non représenté) via l'amplificateur $A_Y$ de cette voie Y.

Selon une caractéristique avantageuse de l'invention, pour améliorer la visualisation des signaux échantillonnés, cette visualisation sera rendue en pseudo-perspective, telle qu'illustré par la figure 7. La matrice rectangulaire des collecteurs (au nombre de soixante quatre dans le case de l'exemple choisi) est transformée en un parallélogramme. Le plan du parallélogramme est lui-même divisé en zones: chaque zone ou parallélogramme élémentaire représente un des éléments collecteurs $e_{mn}$, répartis en m lignes et n collones. Dans l'exemple concret de la figure 5, il est donc nécessaire d'obtenir huit lignes de balayage horizontal X, divisée chacune en huit zones d'égale valeur. Pour chacune de ces zones l'amplitude du balayage vertical Y par rapport à la position de repos de la ligne de balayage représente l'amplitude du signal échantillonné $S_{mn}$ correspondant à cette zone.

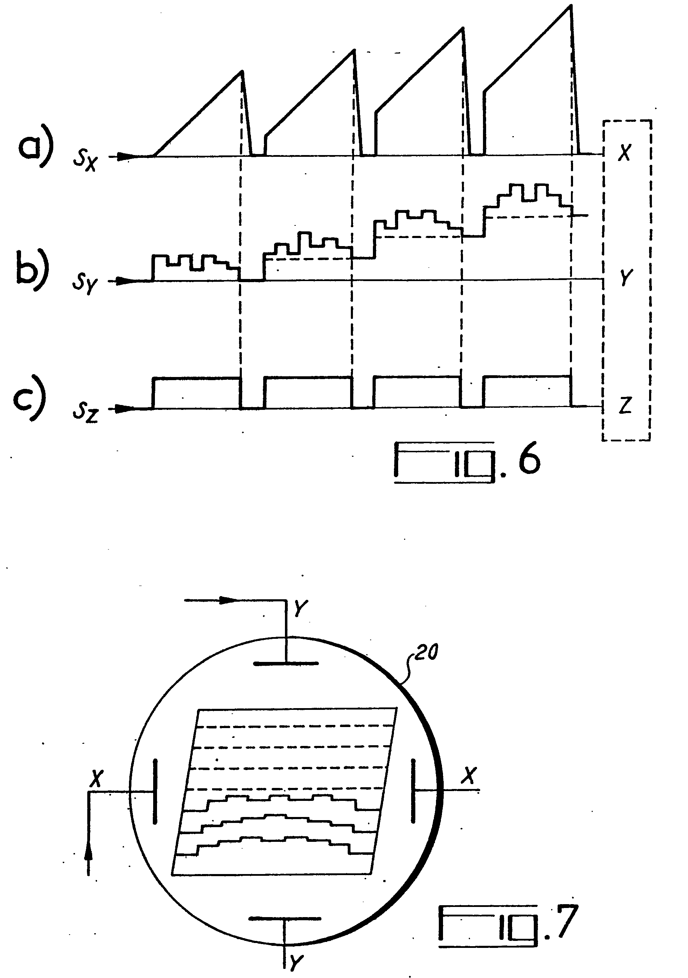

Pour mettre en oeuvre le procédé qui vient d'être décrit, il est nécessaire, d'une part, de superposer aux signaux $S_{mn}$, sur la voie Y, un signal en marches d'escalier d'égales hauteurs pour obtenir (après amplification dans l'amplificateur $A_Y$) le signal $S_Y$ composite illustré en figure 6, et, d'autre part, de superposer à un signal de balayage X classique en dents de scie, également un signal en marches d'escalier d'égales hauteurs, ce pour obtenir le signal $S_X$ composite illustré en figure 6 (signal $S_X$ de sortie de l'amplificateur $A_X$). Comme il est bien connu, il est nécessaire également de produire un signal d'effacement pendant le retour de ligne. Ce signal $S_Z$, transmis par l'amplificateur $A_Z$ à la voie Z de l'oscilloscope, est illustré par la ligne $S_Z$ de la figure 6.

Ces différents signaux $S_X$, $S_Y$, $S_Z$, ainsi que les signaux $CDM_1$ à $CDM_4$ de commande de multiplexage sont produits par un ensemble de circuits logiques qui va maintenant être décrit.

Un générateur d'impulsions isochrones (ou un circuit analogue) produit un signal impulsionnel de fréquence élevée et stable, transmis à l'entrée d'un diviseur $D_1$. Ce diviseur $D_1$ peut être constitué par une échelle binaire ou tout autre type de compteur réduisant la fréquence du générateur H à une valeur convenable, ce au regard des technologies utilisées pour la réalisation des circuits de multiplexage et des circuits de visualisation.

Le diviseur $D_1$ fournit des signaux $D_{S1}$ qui sont transmis, d'une part, sur l'entrée de part, à un intégrateur I. Ces signaux $D_{S1}$ sont également transmis à l'entrée $S_3$ de l'amplificateur $A_Z$ de la voie Z. Leur fréquence est donc égale à la fréquence de balayage de ligne. L'intégrateur I sert à produire les signaux de balayage X en dents de scie. Il peut comprendre notamment un amplificateur opérationnel muni de deux entrées différentielles, l'amplificateur comprenant des circuits de rétro-action capacitifs. L'amplitude des signaux en dents de scie peut être réglée à l'aide du potentiomètre $R_3$, reliée à l'une des entrées de l'amplificateur opérationnel. Cette méthode d'obtention des signaux en dents de scie est bien connue de l'homme de métier et ne sera pas décrite plus avant. Le signal $S_2$ de sortie de l'intégrateur I est transmis à l'entrée de l'amplificateur $A_X$ de la voie X servant au balayage horizontal.

Le compteur binaire $D_2$ a une capacité, c'est-à-dire un nombre d'étages, limitée au nombre de lignes: huit dans l'exemple décrit. Les sorties de ses huit étages sont transmises aux entrées d'un convertisseur numérique-analogique N/A dont la sortie fournit un signal en marches d'escalier représentant les poids binaires successifs un à huit. A la suite de ce cycle, le compteur est remis à zéro. Le convertisseur numérique-analogique N/A est constitué par exemple par un simple réseau de résistances pondérées en échelle. Tout autre type de circuits ou d'association de circuits permettant de passer d'un signal impulsionnel de fréquence déterminée à un signal en marches d'escalier peut être utilisé dans le cadre de l'invention. Le convertisseur numérique N/A ainsi constitué permet donc d'obtenir un signal en marches d'escalier qui va être superposé, via les potentiomètres d'ajustement $R_1$ et $R_2$, respectivement aux signaux multiplexés $S_{mn}$ pour constituer le signal composite $S_{Ymn}$ (et, après amplification, le signal $S_Y$), et aux signaux en dents de scie $S_2$ (pour constituer, après amplification, le signal $S_X$). Par ce procédé, on obtient la visualisation désirée en forme de parallélogramme sur l'écran de l'oscilloscope.

Le diviseur $D_1$ fournit également sur une seconde sortie un signal $D_{S2}$ de même fréquence que le signal $D_{S1}$ de sortie, mais dont la phase, par rapport à celle du signal $D_{S1}$, peut être adaptée pour des raisons technologiques tenant au choix des circuits logiques et des multiplexeurs. Ce signal $D_{S2}$ est transmis à un décodeur $d_1$. Celui-ci a pour but d'une part, de répartir régulièrement les signaux appliqués aux entrées des multiplexeurs $M_{Y1}$ et $M_{Y4}$ (c'est-à-dire dans l'exemple décrit au rythme de un sur quatre) pour les transmettre aux entrées de comptage de quatre compteurs binaires $C_1$ à $C_4$, chacun de capacité quatre bits; les signaux de sorties $CDM_1$ à $CDM_4$ de ces quatre compteurs $C_1$ à $C_4$ constituant les signaux de commande des multiplexeurs $M_{Y1}$ à $M_{Y4}$. La répartition peut s'effectuer simplement à l'aide d'un registre à décalage recevant les signaux $D_{S2}$ et dont les sorties sont connectées à des portes logiques de type "ET", ou par tout autre procédé connu. Le décodeur $d_1$ produit également les signaux séquentiels de commande $CDM_5$ et $CDM_6$ dans l'ordre chronologique donné par le tableau ci-dessus:

| $CDM_5$ | $CDM_6$ | aiguillage réalisé |
|---------|---------|--------------------|
| 1 0 | 0 0 | $e_1 \longrightarrow S_{mn}$ |
| 0 1 | 0 0 | $e_2 \longrightarrow S_{mn}$ |
| 0 0 | 1 0 | $e_3 \longrightarrow S_{mn}$ |
| 0 0 | 0 1 | $e_4 \longrightarrow S_{mn}$ |

Le cycle se répète de façon identique.

L'invention n'est pas limitée à l'exemple de réalisation que vient d'être décrit, notamment les types particuliers de circuits logiques n'ont été indiqués que dans un but d'illustration d'une réalisation concrète de l'invention; de nombreux autres types étant disponibles sur le marché. Enfin, la visualisation peut être assurée par un autre organe qu'un tube cathodique. A titre d'exemple non limitatif, elle pourrait l'être par un panneau matriciel de cellules à plasma ou de cellules à cristaux liquides. La fréquence et les signaux de commandes doivent être adaptés à la nature spécifique des organes de visualisation retenus.

**Revendications**

1. Dispositif de visualisation de la répartition de la densité du courant au sein d'un faisceau de particules électriquement chargées, comportant une pluralité d'éléments collecteurs ($e_{mn}$) sous forme de capteurs répartis en lignes et en colonnes et interceptant les particules chargées du faisceau, des moyens de multiplexage des signaux électriques engendrés comptage d'un compteur binaire $D_2$, et d'autre part les capteurs, commandés par une horloge (H), un oscilloscope dont les amplificateurs d'entrée pour le balayage horizontal (X) et vertical (Y) de l'écran par le spot du faisceau reçoivent respectivement un signal sous forme de rampe inclinée et un signal issu des moyens de multiplexage, lesdits signaux étant rythmés par l'horloge de manière à faire apparaître sur l'écran un signal dont l'amplitude correspond successivement à l'amplitude des signaux électriques engendrés par chaque capteur, l'image d'une ligne de capteurs étant décalée par rapport à la précédente à l'aide de moyens pour ajouter une tension de valeur réglable prédéterminée à celle issue des moyens de multiplexage et transmise à l'amplificateur vertical, caractérisé en ce que des moyens de prélèvement de tension ($R_2$) sont connectés à la sortie des moyens pour ajouter une tension de valeur réglable prédéterminée ($D_2$, N/A, $R_1$) et sont reliés à l'amplificateur horizontal ($A_x$), une fraction réglable de la tension de valeur réglable prédéterminée étant ainsi ajoutée à la tension injectée dans l'amplificateur horizontal ($A_x$), de manière à décaler sur l'écran, d'une même valeur et dans le même sens chaque début et chaque fin de signal correspondant à une ligne de capteurs par rapport au signal représentant la ligne précédente, le tout pour obtenir sur ledit écran une vue en pseudo-perspective de la densité de courant du faisceau.

2. Dispositif selon la revendication 1, caractérisé en ce qu'il comporte en outre un système de base de temps commandé par l'horloge (H) constitué par un diviseur ($D_1$) délivrant un signal ($DS_1$) d'une part, respectivement à un compteur binaire ($D_2$) connecté à un convertisseur numérique/analogique (N/A) et à un intégrateur (I) qui délivre le signal ($S_2$) sous forme de rampe inclinée à l'amplificateur ($A_x$), et un signal ($DS_2$) d'autre part à un décodeur ($d_1$) qui associé à des compteurs ($C_1$, $C_2$, $C_3$, $C_4$) engendre des impulsions de commande aux moyens de multiplexage, le signal issu du convertisseur (N/A) étant envoyé par l'intermédiaire d'une première résistance variable ($R_2$) en tant que moyens de prélèvement de tension à l'amplificateur horizontal ($A_x$) et par l'intermédiaire d'une seconde résistance variable ($R_1$), faisant partie des moyens pour ajouter ladite tension der valeur prédéterminée, à l'amplificateur vertical ($A_y$).

3. Dispositif selon la revendication 2, caractérisé en ce quele signal ($DS_1$) est également envoyé à un amplificateur ($A_z$) d'effacement qui est connecté à la voie (Z) de l'oscilloscope de manière à assurer l'effacement du retour du balayage.

4. Dispositif selon l'une des revendications 1 à 3, caractérisé en ce que chaque capteur est relié à l'une des entrées des moyens de multiplexage par l'intermédiaire d'un amplificateur différentiel ($A_{mn}$) dont les entrées

sont connectées aux bornes d'une résistance ($R_{mn}$), l'une des entrées étant connectée par ailleurs à une source de tension continue (E) tandis que l'autre est connectée au capteur.

## Claims

1. A device for visualizing the current density distribution in a beam of electrically loaded particles, comprising a plurality of collector elements ($e_{mn}$) in the form of captors arranged in rows and columns and adapted to intercept the loaded particles of the beam, means of multiplexing electrical signals generated by said captors and controlled by a clock circuit (H), an oscilloscope the input amplifiers of which are provided for scanning the screen horizontally (X) and vertically (Y) by means of the spot and which receive respectively a signal in the form of an inclined slope and a signal issuing from said multiplexing means, said signals being rythmed by a clock circuit in such a manner that on said screen a signal appears the amplitude of which corresponds successively to the amplitude of the electrical signals generated by each captor, the image of a row of captors being shifted with respect to the preceding one by the effect of means for adding a voltage of a predetermined adjustable value to the voltage produced by said multiplexing means and transmitted to the vertical amplifier, characterized in that voltage tapping means ($R_2$) are connected to the output of said means for adding a voltage of a predetermined adjustable value ($D_2$, N/A, $R_1$) and are also connected to the horizontal amplifier ($A_x$), an adjustable fraction of said voltage of a predetermined adjustable value being thus added to the voltage injected into the horizontal amplifier ($A_x$), so as to shift on the screen in the same amount and in the same direction each start and each end of any signal corresponding to a row of captors, with respect to the signal representing the preceding row, whereby a pseudo-perspective view of the current density of said beam is obtained on said screen.

2. A device according to claim 1, characterized in that it further comprises a timebase system controlled by said clock circuit (H) and constituted by a divider ($D_1$) which delivers, on the one hand, a signal ($DS_1$) transmitted respectively to a binary counter ($D_2$) connected to a digital/analog converter (N/A) and to an integrator (I) which delivers said signal ($S_2$) in the form of an inclined slope to the amplifier ($A_x$), and, on the other hand, a signal ($DS_2$) transmitted to a decoder ($d_1$) which is associated to counters ($C_1$, $C_2$, $C_3$, $C_4$) and generates control pulses for said multiplexing means, the signal produced by said converter (N/A) being transmitted through a first adjustable resistor ($R_2$) constituting voltage tapping means to the horizontal amplifier ($A_x$), and through a second adjustable resistor ($R_1$), which is part of said means for adding said predetermined adjustable voltage, to the vertical amplifier ($A_v$).

3. A device according to claim 2, characterized in that the signal ($DS_1$) in also transmitted to an extinction amplifier ($A_z$) which is connected to the line (Z) of the oscilloscope so as to ensure the extinction of the scanning flyback.

4. A device according to any one of claims 1 to 3, characterized in that each captor is connected to one of the inputs of said multiplexing means through a differential amplifier ($A_{mn}$) the inputs of which are also connected to the terminals of a resistor ($R_{mn}$), one of the inputs being further connected to a direct current source (E), while the other input is connected to the captor.

## Patentansprüche

1. Gerät zur Sehanzeige der Stromdichtenverteilung innerhalb eines aus elektrische geladenen Teilchen bestehenden Strahlenbündels, umfassend eine Mehrzahl von Sammelelementen ($e_{mn}$) in Form von Auffangorganen, die reihenweise und spaltenweise angeordnet sind und die gelandenen Teilchen des Strahlenbündels auffangen, von einem Zeitgeber (H) gesteuerte Mittel zum Multiplexieren der durch die Auffangorganen erzeugten elektrischen Signale, ein Oszilloskop, dessen Eingangsverstärker für die horizontale und vertikale Abtastung (X und Y) des Bildschirms durch den Bildpunkt des Strahlenbündels ein Signal in Form einer geneigten Rampe bzw. ein von den Multiplexmitteln erzeugtes Signal empfangen, wobei diese Signale vom Zeitgeber rhytmisch gesteuert werden, derart, dass auf dem Bildschirm ein Signal erscheint, dessen Amplitude sukzessiv derjenigen der von jedem Auffangorgan erzeugten Signale entspricht, und wobei das Bild einer Auffangorganreihe in bezug auf vorhergehende Reihe versetzt ist durch die Wirkung von Mitteln zum Hinzufügen einer vorbestimmten einstellbaren Spannung zur von den Multiplexmitteln erzeugten und an den Vertikalverstärker übertragenen Spannung, dadurch gekennzeichnet, dass Spannungsabgreifmittel ($R_2$) an den Ausgang der Spannungshinzufügungs-

mittel ($D_2$, N/A, $R_1$) angeschlossen und mit dem Horizontalverstärker ($A_x$) verbunden sind, so dass eine einstellbare Fraktion der genannten vorbestimmten einstellbaren Spannung zu der in den Horizontalverstärker ($A_x$) eingeleiteten Spannung hinzugefügt wird, derart, dass auf dem Bildschirm jeder Anfang und jedes Ende eines einer Auffangorganreihe entsprechenden Signals um einen jeweils gleichen Wert und in gleicher Richtung in bezug auf das die vorhergehende Reihe darstellende Signal versetzt wird, wodurch auf dem Bildschirm eine pseudoperspektivische Darstellung der Stromdichte des Strahlenbündels erzielt wird.

2. Gerät nach Anspruch 1, dadurch gekennzeichnet, dass es ferner ein vom Zeitgeber (H) gesteuertes Zeitbasissystem aufweist, das aus einem Teiler ($D_1$) besteht, der einerseits ein Signal an einen mit einem Numerisch/analog=Wandler (N/A) verbundenen Binärzähler ($D_2$), sowie an einem das Signal ($S_2$) in Form einer geneigten Rampe an den Verstärker abgebenden Integrator (I), und andererseits ein Signal ($DS_2$) an einem mit Zählern ($C_1$, $C_2$, $C_3$, $C_4$) zusammenwirkenden Entschlüssler ($d_1$) abgibt, welcher Steuerimpulse für die Multiplexmittel erzeugt, wobei das vom Wandler (N/A) erzeugte Signal über einen die Spannungsabgreifmittel bildenden ersten Regelwiderstand ($R_2$) an den Horizontalverstärker ($A_x$) und über einen den Spannungshinzufügungsmitteln zugehörigen zweiten Regelwiderstand ($R_1$) an dem Vertikalverstärker ($A_v$) angelegt wird.

3. Gerät nach Anspruch 2, dadurch gekennzeichnet, dass das Signal ($DS_1$) ferner an einen über die Leitung (Z) mit dem Oszilloskop verbundenen Löschverstärker ($A_z$) übertragen wird, derart, dass der Abtastrücklauf gelöscht wird.

4. Gerät nach einem der Ansprüche 1 bis 3, dadurch gekennzeichnet, dass jedes Auffangorgan über einen Differentialverstärker ($A_{mn}$), dessen Eingänge mit den Endklemmen eines Widerstandes ($R_{mn}$) verbunden sind, an einen der Eingänge der Multiplexmittel angeschlossen ist, wobei einer dieser Eingänge ferner mit einer Gleichstromquelle (E) und der andere Eingang mit dem Auffangorgan verbunden ist.

Fig. 1

Fig. 2

Fig. 3

Fig. 4

FIG.5

0 0 1 1 0 3 4

a) $s_X$ ────► X

b) $s_Y$ ────► Y

c) $s_Z$ ────► Z

Fig. 6

Y

X ──────── X

Y

Fig. 7

4